# EUROPÄISCHE PATENTSCHRIFT

(11) **EP 1 284 872 B1**
(45) Veröffentlichungstag und Bekanntmachung des Hinweises auf die Patenterteilung: **07.09.2005**
(21) Anmeldenummer: 01933451.5
(22) Anmeldetag: 17.05.2001
(51) Int. Cl.: B44C 5/04

(54) **VERFAHREN ZUR HERSTELLUNG VON GLASFLIESEN, GLASBORDÜREN, GLASDEKORPANEELEN ODER DGL.**
METHOD FOR PRODUCING GLASS TILES, GLASS EDGINGS, DECORATIVE GLASS PANELS OR SIMILAR
PROCEDE DE PRODUCTION DE CARREAUX EN VERRE, DE BORDURES EN VERRE, DE PANNEAUX DECORATIFS EN VERRE OU SIMILAIRES

(30) Priorität: 18.05.2000 AT 8672000
(43) Veröffentlichungstag der Anmeldung: 26.02.2003
(73) Patentinhaber: Lindenberg, Josef, 9210 Pörtschach (AT)
(72) Erfinder: Lindenberg, Josef, 9210 Pörtschach (AT)
(74) Vertreter: Babeluk, Michael
(86) Internationale Anmeldenummer: PCT/AT2001/000147
(87) Internationale Veröffentlichungsnummer: WO 2001/087644

(56) Entgegenhaltungen:
- DE-A- 3 313 742
- PATENT ABSTRACTS OF JAPAN vol. 2000, no. 05, 14. September 2000 (2000-09-14) & JP 2000 040463 A (TORAY IND INC), 8. Februar 2000 (2000-02-08)
- PATENT ABSTRACTS OF JAPAN vol. 1997, no. 05, 30. Mai 1997 (1997-05-30) & JP 09 012336 A (ASAHI GLASS CO LTD), 14. Januar 1997 (1997-01-14)
- DATABASE WPI Section Ch, Week 199724 Derwent Publications Ltd., London, GB; Class A25, AN 1997-262157 XP002175573 & JP 09 012345 A (PAI H M), 14. Januar 1997 (1997-01-14)
- DATABASE WPI Section Ch, Week 197501 Derwent Publications Ltd., London, GB; Class A82, AN 1975-00846W XP002175574 & JP 49 045565 B (NODA PLYWOOD MFG CO), 5. Dezember 1974 (1974-12-05)

## Beschreibung

Die Erfindung betrifft ein Verfahren zur Herstellung von Glasfliesen, Glasbordüren, Glasdekorpaneelen oder dgl., deren Rückseite reliefartig strukturiert ist.

Zur Verkleidung von Wänden oder Böden von Gebäuden sind seit einiger Zeit Glasfliesen bekannt, mit welchen sich im Vergleich zu keramischen Fliesen interessante optische Effekte erzielen lassen.

So sind beispielsweise aus der AT 304.033 B Scheiben-, Platten-, Ziegel- und Mosaiksteine aus durchsichtigem Glas oder durchsichtigem Kunststoff bekannt, welche auf der Rückseite eine Schicht aus natürlichem oder künstlichem Fischsilber angeordnet haben. Dadurch ist es möglich, neuartige optische und ästhetische Effekte zu erzielen, wenn man derartige Platten beispielsweise als Mosaiksteine verlegt. Für die Verfliesung in einem herkömmlichen Format von etwa 20 x 30 cm und den dabei notwendigen Bearbeitungsschritten (Schneiden bzw. Herstellen von Ausnehmungen und Bohrungen), sind derartige Fliesen allerdings kaum geeignet, da Fliesenleger meist nicht über die Werkzeuge bzw. die Kenntnisse von Fachleuten für die Glasverarbeitung verfügen.

Ähnliches gilt für eine aus der GB 2,271,529 A bekannte Glasfliese, die an ihrer Rückseite bedruckt ist, wobei auf der Rückseite eine vorher in Fliesengröße hergestellte Deckplatte aufgeklebt wird. Die Deckplatte wird in einer Gussform hergestellt und besteht unter anderem aus Magnesiumoxid, Magnesiumchlorid, Zement, Feinsand und Wasser, welche Mischung in der Gussform aushärten gelassen wird. Eine derartige Glasfliese besitzt einen mehrschichtigen, inhomogenen Aufbau, welcher eine herkömmliche Verarbeitung, wie bei keramischen Fliesen, nicht zulässt.

In diesem Zusammenhang ist aus der WO 99/58786 ein Verfahren zur Herstellung einer Glasfliese bekannt geworden, bei welchem die Glasfliese zunächst in der gewünschten Form geschnitten, gereinigt und einer Wärmebehandlung bis zur Erweichung unterzogen wird. Nach dem Abkühlen der Glasfliese auf eine Temperatur im Bereich der Raumtemperatur wird eine mineralische Lackschicht auf eine Seite der Fliese aufgetragen und die Lackschicht bei einer Temperatur unterhalb der Maximaltemperatur der vorangegangen Wärmebehandlung eingebrannt. Je nach verwendeter Glassorte erfolgt die Wärmebehandlung bei Maximaltemperaturen im Bereich von 750°C bis 850°C und das nachfolgende Einbrennen der Lackschicht bei einer Temperatur von etwa 560°C bis etwa 660°C.

Durch die Wärmebehandlung der Glasfliese wird eine Gefügeveränderung erreicht, die ein gezieltes Brechen des Glases im Zuge der einzelnen Bearbeitungsschritte bei der Fliesenverlegung ermöglicht. Während der Wärmebehandlung ist die Fliese auf einem Formsandbett gelagert, wobei deren Rückseite strukturiert werden kann. Dabei kann in das Formsandbett, beispielsweise ein Asbestsandbett, vor dem Auflegen der Fliese durch einen Stempel oder eine Walze ein Muster eingedrückt werden. Nachteiligerweise können mit einer derartigen Vorgangsweise nur relativ grobe Strukturen verwirklicht werden, welche beim Auflegen der Glasplatten bzw. der Fliese auf das Sandbett relativ leicht verändert oder zerstört werden können.

Aus der DE 42 26 946 A1 ist ein Verfahren zur Herstellung von dekorierten Glaskeramikartikeln und nach diesem Verfahren hergestellte Glaskeramikartikel bekannt, bei welchen das Dekor ganz oder teilweise in die Oberfläche der Glaskeramik eingesunken ist. Dabei wird die zu dekorierende Oberfläche des Grundglases im Bereich seiner Transformationstemperatur als Anode geschaltet, wobei man einen Strom fließen lässt, der eine Veränderung der Oberfläche des Grundglases bis zu einer gewünschten Tiefe hervorruft, welche von der Dauer des Stromflusses abhängig ist. Dazu ist es notwendig die Oberfläche der Grundglasplatte mit einer durchgehenden, etwa 200nm dicken, leitfähigen Goldschicht zu versehen, welche vor Aufbringen des Keramikdekors wieder entfernt werden muss. Nach dieser Vorbehandlung sinkt das Dekor genau so weit in die Oberfläche der Grundglasplatte ein, dass die einzelnen Dekorpunkte die Oberfläche der Glasplatte nicht mehr überragen, sondern eine geschlossene ebene Oberflächeneinheit ausbilden.

Aus der DE 44 08 192 A1 ist ebenfalls ein Verfahren zur Herstellung von dekorierten Glaskeramik - oder Glasartikeln bekannt, wobei auf das Substrat an jenen Stellen, die später dem Dekor entsprechen, eine Substanz auf der Basis von Siebdrucköl aufgebracht wird. Das Siebdrucköl reagiert bei Temperaturen >600°C mit dem Substrat, wobei ein entfernbares Reaktionsprodukt gebildet wird. Nachdem das Reaktionsprodukt entfernt wird, kann in die gebildeten Vertiefungen eine Dekorfarbe gefüllt und bei geeigneter Temperatur eingebrannt werden.

Weiters zeigt die WO 99/37129 A2 ein Verfahren zur Herstellung eines Verbundwerkstoffes, wobei ein Grundelement und ein transparentes Deckelement unter Einschluss eines nicht vollständig transparenten Materials (Einbettungsmaterial) und Verwendung eines Klebemittels verbunden werden. Das Einbettungsmaterial ist dabei ein Pulver, das natürliche und/oder künstliche Farbpigmente enthält, wobei das Pulver mit dem Klebemittel vermischt wird und Grund- und Deckelement mit dem pulverversetzten Klebemittel verbunden werden. Durch den inhomogenen Aufbau des Verbundwerkstoffes ergeben sich ähnliche Nachteile, wie bei der bereits zitierten Glasfliese gemäß GB 2,271,529 A.

Aufgabe der vorliegenden Erfindung ist es, ausgehend vom oben beschriebenen Verfahren zur Herstellung von Glasfliesen mit strukturierter Rückseite ein Verfahren vorzuschlagen, bei welchem auch feinstrukturierte Muster und Motive in einfacher Weise realisiert werden können. Eine weitere Aufgabe der Erfindung besteht darin, derartige Glasfliesen ohne großem zusätzlichen Arbeitsaufwand farbig zu gestalten.

Diese Aufgabe wird erfindungsgemäß durch folgende Schritte gelöst:
- Zuschneiden der Glasplatte im gewünschten Format,
- Auftragen einer Klebeschicht mit einem Druckverfahren in vorbestimmten, ein Muster oder Motiv bildenden Bereichen der Rückseite der Glasplatte,
- Aufbringen einer hochtemperaturbeständigen Pulverschicht auf die Rückseite der Glasplatte, sowie Entfernen des überschüssigen Pulvers von den nicht haftenden Bereichen der Glasplatte,
- Auflegen der Glasplatte mit der beschichteten Rückseite auf eine mit einem Trennmittel versehene hochtemperaturbeständige Unterlage,
- Temperaturbehandlung der Glasplatte bis zu deren plastischen Verformung, wobei die Glasplatte durch deren Eigengewicht in das durch die Pulverschicht gebildete Muster oder Motiv einsinkt, sowie
- Entfernen des hochtemperaturbeständigen Pulvers aus den mit dem Muster oder Motiv bedeckten Bereichen nach dem Abkühlen der Glasplatte.

Durch die im Druckverfahren aufgetragene Klebeschicht können beliebige Muster oder Motive vorgegeben werden, in welchen Bereichen das als Formsand wirkende hochtemperaturbeständige Pulver haftet. Zur Erzielung größerer Strukturtiefen des Musters oder Motivs können mehrere Klebe- und Pulverschichten nacheinander aufgetragen werden.

In einer besonders vorteilhaften Weiterbildung der Erfindung ist vorgesehen, dass vor dem Auftragen der Klebeschicht und der Pulverschicht in vorbestimmten Bereichen der Rückseite der Glasplatte zumindest eine mineralische Farbschicht aufgetragen wird. Es können somit kostengünstig und mit einer hohen Herstellungseffizienz mit farblichen Motiven hinterlegte Glasfliesen, welche zusätzlich reliefartig strukturiert sind, in einem Arbeitsgang hergestellt werden. Durch die Temperaturbehandlung der Glasplatte bis zu deren plastischen Verformung erfolgt weiters im gleichen Arbeitsgang eine grifffreundliche Abrundung der Ecken und Kanten der Glasplatten, wobei die Temperaturbehandlung derart gesteuert werden kann, dass eine hohe Maßhaltigkeit und Planität der Fliesen bzw. Glasbordüren erreicht wird.

Als weiterer Vorteil ist hervorzuheben, dass für die Herstellung der reliefartigen Strukturen keine feste Schmelz- oder Gussformen erforderlich sind, so dass auch keine Probleme beim Ausformen, beispielsweise durch unterschiedliche Ausdehnungskoeffizienten der Schmelzform und der Glasfliese, entstehen können.

Erfindungsgemäß kann sowohl die Farbschicht als auch die Klebeschicht mittels Siebdruck-, Tampondruck-, oder Offsetdruckverfahren aufgetragen werden. Die Farbbereiche und die Strukturbereiche können teilweise oder ganz überlappen, es ist allerdings auch möglich, die Farbe nur in ebenen Bereichen aufzutragen und die Strukturbereiche ungefärbt zu belassen. Zur Erzielung weiterer Effekte kann auch gefärbtes bzw. an der Oberseite gerautes oder geätztes Glas verwendet werden. Bevorzugt erfolgt die Temperaturbehandlung der Glasplatten bei Temperaturen zwischen 780°C und 810°C.

Als hochtemperaturbeständiges Pulver wird bevorzugt Aluminiumoxid- oder Aluminiumsilikatpulver verwendet, welches mit einer Bestäubungseinrichtung auf die Rückseite der Glasplatte aufgetragen wird. Nach dem Auftragen des Aluminiumoxid- bzw. Aluminiumsilikatpulvers werden Überschüsse aus den nichthaftenden Bereichen der Glasplatte, vorzugsweise mit einem Luftstrahl, entfernt.

Besonders vorteilhaft für die mineralische Farbschicht hat sich eine Mischung aus Glasfritten, Farbpigmenten und Ölen erwiesen, welche in einem Arbeitsgang eingebrannt werden.

Als weiterer Vorteil ist anzuführen, dass sich die einzelnen Verfahrensschritte automatisiert in einem Tunnelofen durchführen lassen.

In einer Weiterbildung der Erfindung ist vorgesehen, dass auf die der reliefartig strukturierten Rückseite gegenüberliegende Sichtseite der Glasplatte hochtemperaturbeständige Partikel, vorzugsweise Korundpartikel, unter Verwendung eines Siebdruck-, eines Tampondruck-, oder eines Offsetdruckverfahrens aufgeklebt und während der Temperaturbehandlung der Glasplatte teilweise eingeschmolzen werden. Durch diese Maßnahme kann die Oberfläche der Fliese mit einer hohen Rutsch- und Abrasionsfestigkeit ausgestattet werden, wobei die Partikel als Muster oder ganzflächig aufgebracht werden können. Von Vorteil sind dabei Korundpartikel mit einer Körnung von 0,1 bis 3 mm. Derartige Glasfliesen können auch für Fußböden im privaten und öffentlichen Bereich sowie für Treppenstufen verwendet werden.

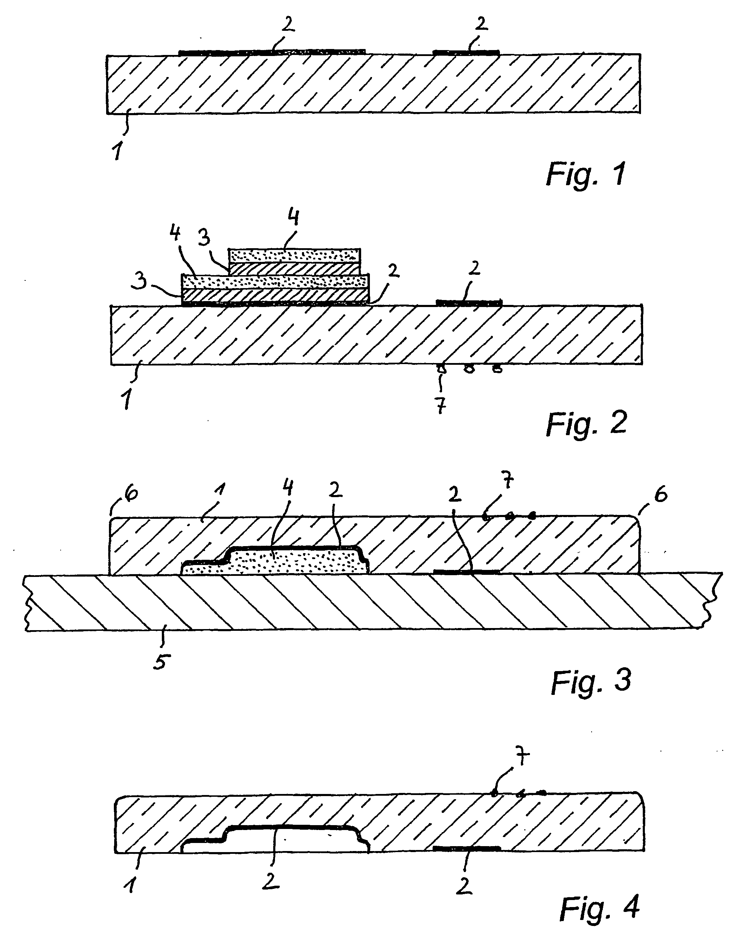

Das erfindungsgemäße Verfahren wird im folgenden anhand von schematischen Zeichnungen näher erläutert. Es zeigen die Fig. 1 bis 4 unterschiedliche Stadien im erfindungsgemäßen Herstellungsverfahren für eine Glasfliese in einer Schnittdarstellung. Zur besseren Anschaulichkeit sind einzelne Schichten überhöht (nicht maßstäblich) dargestellt.

Nach dem maßgenauen, winkelhaltigen Schneiden einer Glasplatte 1 (Float oder Optiwhite-Glasplatten) werden diese gewaschen, getrocknet und per Siebdruck mit einer oder mehreren Farbschichten 2 bedruckt (siehe Fig. 1).

Nach dem Trocknen der Farben wird mittels Siebdruck eine Klebeschicht 3 in den für das Muster oder Motiv ausgewählten Bereichen der Glasplatte aufgebracht. Im nächsten Schritt wird mittels einer Bestäubungsanlage eine hochtemperaturbeständige Pulverschicht 4 dosiert aufgetragen, welche an den nichtklebenden Stellen durch Abblasen entfernt wird. Wie in Fig. 2 dargestellt, kann dieser Auftrag mehrmals wiederholt werden, um die gewünschte Tiefe des Reliefs zu erreichen.

Nach dem Austrocknen der Farb- und Aluminiumoxidbeschichtung wird die Glasplatte auf eine mit einem Trennmittel versehene, hochtemperaturbeständige Unterlage 5, beispielsweise eine Keramikfaserplatte, mit der beschichteten Seite nach unten aufgelegt und je nach Zusammensetzung der Farbschicht einer Temperaturbehandlung zwischen 780°C und 810°C unterworfen. Dabei verflüchtigen sich die organischen Stoffe der Farb- und der Klebeschicht, wobei die aufgetragene hochtemperaturbeständige Pulverschicht temperaturstabil bleibt und die Glasplatte 1 durch ihr Eigengewicht in das durch die Pulverschicht bzw. die Pulverschichten 4 gebildete Muster oder Motiv einsinkt. Dieser Zustand ist in Fig. 3 dargestellt, wobei zu erkennen ist, dass durch die Temperaturbehandlung im selben Arbeitsgang die Kanten 6 der Glasplatte 1 grifffreundlich abgerundet werden.

Nach dem Abkühlen der Glasplatte 1 wird das Aluminiumoxidpulver ausgebürstet, so dass das in Fig. 4 dargestellte Endprodukt entsteht. Die Farbschicht 2, welche mit der Glasfliese verschmolzen ist, sowie das gewünschte Relief in der Glasfliese können somit kostengünstig in einem Arbeitsgang hergestellt werden.

Wie in den Fig. 2 bis 4 dargestellt, ist es auch möglich Korundpartikel 7 auf die Sichtseite der Glasplatte 1 aufzukleben, welche bei der Temperaturbehandlung der Glasplatte 1 teilweise einschmelzen und der Glasfliese eine hohe Rutsch- und Abrasionsfestigkeit geben.

## Patentansprüche

1. Verfahren zur Herstellung von Glasfliesen, Glasbordüren, Glasdekorpaneelen oder dgl., deren Rückseite reliefartig strukturiert ist, bestehend aus folgenden Schritten:
- Zuschneiden einer Glasplatte (1) im gewünschten Format,
- Auftragen einer Klebeschicht (3) mit einem Druckverfahren in vorbestimmten, ein Muster oder Motiv bildenden Bereichen der Rückseite der Glasplatte,
- Aufbringen einer hochtemperaturbeständigen Pulverschicht (4) auf die Rückseite der Glasplatte (1), sowie Entfernen des überschüssigen Pulvers von den nicht haftenden Bereichen der Glasplatte (1),
- Auflegen der Glasplatte (1) mit der beschichteten Rückseite auf eine mit einem Trennmittel versehene hochtemperaturbeständige Unterlage (5),
- Temperaturbehandlung der Glasplatte (1) bis zu deren plastischen Verformung, wobei die Glasplatte (1) durch deren Eigengewicht in das durch die Pulverschicht (4) gebildete Muster oder Motiv einsinkt, sowie
- Entfernen des hochtemperaturbeständigen Pulvers aus den mit dem Muster oder Motiv bedeckten Bereichen nach dem Abkühlen der Glasplatte (1).

2. Verfahren nach Anspruch 1, **dadurch gekennzeichnet, dass** vor dem Auftragen der Klebeschicht (3) und der Pulverschicht (4) in vorbestimmten Bereichen der Rückseite der Glasplatte (1) zumindest eine mineralische Farbschicht (2) aufgetragen wird.

3. Verfahren nach Anspruch 2, **dadurch gekennzeichnet, dass** zum Auftragen der Farbschicht (2) ein Siebdruck-, ein Tampondruck-, oder ein Offsetdruckverfahren verwendet wird.

4. Verfahren nach einem der Ansprüche 1 bis 3, **dadurch gekennzeichnet, dass** zum Auftragen der Klebeschicht (3) ein Siebdruck-, ein Tampondruck-, oder ein Offsetdruckverfahren verwendet wird.

5. Verfahren nach einem der Ansprüche 1 bis 4, **dadurch gekennzeichnet, dass** zur Erzielung einer größeren Strukturtiefe des Musters oder Motivs mehrere Klebe- (3) und Pulverschichten (4) nacheinander aufgetragen werden.

6. Verfahren nach einem der Ansprüche 1 bis 5, **dadurch gekennzeichnet, dass** die Temperaturbehandlung der Glasplatte (1) bei Temperaturen zwischen 780°C und 810°C erfolgt.

7. Verfahren nach einem der Ansprüche 1 bis 6, **dadurch gekennzeichnet, dass** Aluminiumoxid- oder Aluminiumsilikatpulver als hochtemperaturbeständiges Pulver verwendet wird, welches mit einer Bestäubungseinrichtung auf die Rückseite der Glasplatte (1) aufgetragen wird.

8. Verfahren nach einem der Ansprüche 1 bis 7, **dadurch gekennzeichnet, dass** das überschüssige Aluminiumoxid- oder Aluminiumsilikatpulver mit einem Luftstrahl entfernt wird.

9. Verfahren nach einem der Ansprüche 2 bis 8, **dadurch gekennzeichnet, dass** für die mineralische Farbschicht (2) eine Mischung aus Glasfritten, Farbpigmenten und Ölen verwendet wird.

10. Verfahren nach einem der Ansprüche 1 bis 9, **dadurch gekennzeichnet, dass** die einzelnen Verfahrensschritte automatisiert in einem Tunnelofen durchgeführt werden.

11. Verfahren nach einem der Ansprüche 1 bis 10, **dadurch gekennzeichnet, dass** auf die der reliefartig strukturierten Rückseite gegenüberliegende Sichtseite der Glasplatte (1) hochtemperaturbeständige Partikel (7), vorzugsweise Korundpartikel, unter Verwendung eines Siebdruck-, eines Tampondruck-, oder eines Offsetdruckverfahrens aufklebt und während der Temperaturbehandlung der Glasplatte (1) teilweise eingeschmolzen werden.

12. Verfahren nach Anspruch 11, **dadurch gekennzeichnet, dass** Korundpartikel (7) mit einer Körnung von 0,1 bis 3 mm verwendet werden.

## Claims

1. A method of producing glass tiles, glass borders, ornamental panels made from glass or the like, the rear side of which is structured to form a relief, consisting of the following steps:
- trimming a glass slab (1) to the desired size,
- applying an adhesive layer (3) on predetermined regions forming a pattern or a motif on the rear side of the glass slab by means of a printing technique,
- depositing a powder coating (4) that resists high temperatures on the rear side of the glass slab (1) and removing the excess powder from the non-adhesive regions of the glass slab (1),
- positioning the glass slab (1) with its coated rear side on a base (5) that resists high temperatures and is provided with a separating agent,
- submitting the glass slab (1) to a temperature treatment until plastic deformation is achieved, said glass slab (1) sinking into the pattern or motif formed by the powder coating (4) on account of its own weight, and
- removing the powder that resists high temperatures from the regions covered with the pattern or the motif once the glass slab (1) has cooled down.

2. The method according to claim 1, **characterized in that** at least one mineral colored layer (2) is applied to predetermined regions of the rear side of the glass slab (1) prior to applying the layer of adhesive (3) and the layer of powder (4).

3. The method according to claim 2, **characterized in that** a screen-printing, a dabber-printing or an offset-printing technique is used for applying the colored layer (2).

4. The method according to one of the claims 1 through 3, **characterized in that** a screen-printing, a dabber-printing or an offset-printing technique is used for applying the adhesive layer (3).

5. The method according to one of the claims 1 through 4, **characterized in that** several adhesive layers (3) and several powder layers (4) are successively applied for the purpose of obtaining greater structural depth of the pattern or the motif.

6. The method according to one of the claims 1 through 5, **characterized in that** the glass slab (1) is submitted to a temperature treatment at temperatures ranging from 780°C to 810°C.

7. The method according to one of the claims 1 through 6, **characterized in that** the high-temperature resistant powder used is a powder of aluminum oxide or aluminum silicate which is applied to the rear side of the glass slab (1) by means of a dusting device.

8. The method according to one of the claims 1 through 7, **characterized in that** the excess aluminum oxide or aluminum silicate powder is removed using an air jet.

9. The method according to one of the claims 2 through 8, **characterized in that** a mixture of glass frits, color pigments and oils is utilized for the mineral color layer (2).

10. The method according to one of the claims 1 through 9, **characterized in that** the discrete procedure steps are performed in an automatized manner in a tunnel kiln.

11. The method according to one of the claims 1 through 10, **characterized in that** high-temperature resistant particles (7), preferably corundum particles, are glued onto the visible side of the glass slab (1) opposite the relief-like structured rear side thereof by using a screen-printing, dabber-printing or offset-printing technique and are partially melt down while the glass slab (1) is submitted to temperature treatment.

12. The method according to claim 11, **characterized in that** the corundum particles (7) used have a grain size of 0.1 to 3 mm.

## Revendications

1. Procédé de fabrication de carreaux en verre, de bordures en verre, de panneaux de décoration en verre ou de produits analogues dont le côté arrière a une structure en relief, procédé comprenant les étapes suivantes :
- on découpe une plaque de verre (1) aux formats souhaités,
- on applique une couche de colle (3) selon un procédé d'impression et suivant des zones formant le modèle ou le motif sur la face arrière de la plaque de verre,
- on applique une couche de poudre (4) très réfractaire sur le côté arrière de la plaque de verre (1) et on enlève la poudre excédentaire des zones de la plaque de verre (1) qui n'accroche pas,
- on applique la plaque de verre (1) munie de son côté arrière revêtu sur un support (5) très réfractaire, muni d'un agent de séparation,
- on effectue un traitement thermique de la plaque de verre (1) jusqu'à sa déformation plastique, la plaque de verre (1) s'affaissant sous l'effet de son propre poids dans le modèle ou le motif formé par la couche de poudre (4), et
- on enlève la poudre très réfractaire des zones couvertes par le modèle ou le motif après refroidissement de la plaque de verre (1).

2. Procédé selon la revendication 1,
**caractérisé en ce qu'**
avant d'appliquer la couche de colle (3) et la couche de poudre (4) dans des zones prédéterminées du dos de la plaque de verre (1) on applique au moins une couche de teinte minérale (2).

3. Procédé selon la revendication 2,
**caractérisé en ce que**
pour appliquer la couche de teinte (2) on utilise un procédé de sérigraphie, d'impression en tampon, ou d'impression offset.

4. Procédé selon l'une des revendications 1 à 3,
**caractérisé en ce que**
pour appliquer la couche de colle (3) on utilise la sérigraphie, l'impression en tampon ou un procédé d'impression offset.

5. Procédé selon l'une des revendications 1 à 4,
**caractérisé en ce que**
pour réaliser une profondeur importante de la structure du modèle ou du motif on applique successivement plusieurs couches de colle (3) et de poudre (4).

6. Procédé selon l'une des revendications 1 à 5,
**caractérisé en ce que**
le traitement thermique de la plaque de verre (1) se fait à des températures comprises entre 780°C et 810°C.

7. Procédé selon l'une des revendications 1 à 6,
**caractérisé en ce qu'**
on utilise comme poudre très réfractaire une poudre d'oxyde d'aluminium ou de silicate d'aluminium appliquée au dos de la plaque de verre (1) par une installation de pulvérisation.

8. Procédé selon l'une des revendications 1 à 7,
**caractérisé en ce qu'**
on enlève l'excédent de poudre d'oxyde d'aluminium ou de silicate d'aluminium par un jet d'air.

9. Procédé selon l'une des revendications 2 à 8,
**caractérisé en ce que**
pour la couche de teinte minérale (2) on utilise un mélange de frittes de verre, de pigments de couleur et d'huiles.

10. Procédé selon l'une des revendications 1 à 9,
**caractérisé en ce qu'**
on effectue les différentes étapes du procédé séparément, de façon automatique, dans un four à tunnel.

11. Procédé selon l'une des revendications 1 à 10,
**caractérisé en ce qu'**
on colle sur le côté visible de la plaque de verre (1), à l'opposé du dos structuré en relief, des particules très réfractaires (7), de préférence des particules de corindon en utilisant un procédé de sérigraphie, d'impression au tampon ou d'impression offset et on les fait fondre en partie pendant le traitement thermique de la plaque de verre (1).

12. Procédé selon la revendication 11,
**caractérisé en ce qu'**
on utilise des particules de corindon (7) d'une granulométrie comprise entre 0,1 et 3 mm.
